# FASCICULE DE BREVET EUROPEEN

(11) **EP 2 075 417 B1**
(45) Date de publication et mention de la délivrance du brevet: **06.04.2016**
(21) Numéro de dépôt: 07150436.9
(22) Date de dépôt: 27.12.2007
(51) Int. Cl.: F01D 11/00, F01D 5/30

(54) **Plateforme pour une roue aubagée de turbomachine, roue aubagée et compresseur ou turbomachine comportant une telle roue aubagée**
Plattform für ein beschaufeltes Laufrad einer Strömungsmaschine, beschaufeltes Laufrad und Kompressor oder Strömungsmaschine, die ein solches Laufrad umfassen
Platform for a bladed wheel of a turbomachine, bladed wheel and compressor or turbomachine comprising such a bladed wheel

(43) Date de publication de la demande: 01.07.2009
(73) Titulaire: Techspace Aero, 4041 Milmort - Herstal (BE)
(72) Inventeur: Derclaye, Alain, 4218 Couthuin (BE); Ernst, Philippe, 4700 Eupen (BE)
(74) Mandataire: Cardy, Sophie Marie

(56) Documents cités:
- EP-A- 0 441 424
- EP-A- 0 524 876
- EP-A1- 0 388 286
- EP-A1- 1 426 553
- EP-A1- 2 075 417
- DE-U- 7 225 964
- FR-A- 2 715 968
- GB-A- 190 909 278
- US-A- 3 393 862
- US-A- 3 902 824
- US-A- 3 972 645
- US-A- 5 271 718

## Description

L'invention concerne une plateforme pour une roue aubagée de turbomachine comportant un tambour et des aubes de type attache marteau comportant au moins deux ouvertures espacées en direction circonférentielle et aptes à recevoir chacune le pied d'une aube, ce par quoi elle constitue une plateforme multi-aubes sous la forme d'une pièce séparée des aubes, et couvrant un secteur angulaire.

La présente invention se rapporte de manière particulière mais non limitative aux roues aubagées mobiles d'un compresseur basse pression d'une turbomachine.

Habituellement, ces roues aubagées comportent une série d'aubes formant, chacune, une pièce séparée présentant plusieurs parties, ces aubes étant montées directement sur le tambour.

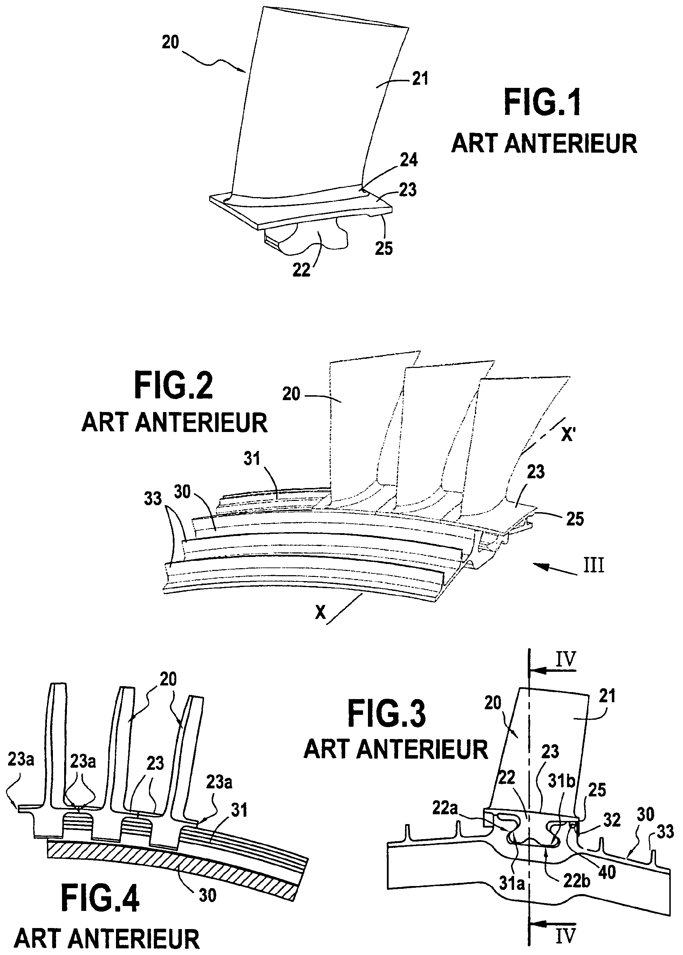

Une telle aube 20 est présentée sur la figure 1 lorsqu'elle est seule et sur les figures 2 à 4 une fois montée dans une rainure circonférentielle 31 d'un tambour 30.

Dans ce cas, l'aube 20 de l'état de l'art visible sur la figure 1 comporte les parties suivantes :
- une pale 21 s'étendant essentiellement en direction radiale et axiale et constituant la partie qui transmet l'énergie cinétique au flux d'air,
- un pied 22 constituant la partie qui maintient l'aube sur le rotor en étant logé dans le tambour 30,
- une plateforme 23 s'étendant essentiellement en direction axiale et circonférentielle, constituant la partie qui délimite et canalise le flux d'air, et située entre la pale 21 et le pied 22, et
- un rayon 24 constituant la partie de liaison entre la pale 21 et la plateforme 23 et présentant une face extérieure de transition progressive au profil concave.

Après montage dans la rainure circonférentielle 31 du tambour 30 d'axe X-X', comme on le voit sur les figures 2 à 4 :
- les plateformes 23 viennent en butées les unes contre les autres deux à deux par leur face d'extrémité circonférentielle 23a (voir la figure 4), d'où il s'ensuit un blocage en direction circonférentielle des aubes 20 par rapport au tambour 30 grâce à un verrou (non représenté) monté entre la rangée d'aubes 20 et dans une encoche de verrouillage (non représentée) de la rainure circonférentielle 31, et
- le pied 22 et la rainure circonférentielle 31 présentent des faces d'appui 22a, 22b et 31a, 31b (voir figure 3) en regard qui coopèrent l'une avec l'autre deux à deux d'où il s'ensuit un blocage en direction radiale et axiale des aubes 20 par rapport au tambour 30 (lors de la rotation et sous l'effet de la force centrifuge, les faces d'appui inclinées 22a et 31a viennent en contact).

Dans ce cas, un taquet annulaire 25 est disposé sur la face intérieure de la plateforme 23, sur l'extrémité aval (voir les figures 1, 3 et 4) ou sur l'extrémité amont de la plateforme 23. En variante, à la fois l'extrémité aval et l'extrémité amont de la plateforme 23 sont équipées d'un taquet 25.

Ce taquet 25 forme une butée en dessous de la plateforme 23 qui garantit, lorsque le moteur est à l'arrêt et que les aubes 20 ne sont pas centrifugées, que l'aube 20 portant ce taquet reste en bonne position. En effet, le taquet 25 forme par son extrémité libre une face de retenue venant en appui contre la face supérieure (face extérieure) d'une des parois latérales entourant la rainure circonférentielle 31 : ainsi, on empêche le pivotement de l'aube 20 autour du pied 22 (autour d'un axe parallèle à la direction perpendiculaire à la figure 3). Ce taquet 25 sert aussi à garantir l'étanchéité, car il sert aussi de surface d'appui au joint torique 40 qui est logé dans un sillon annulaire 32 de la face extérieure du tambour 30, à proximité de la rainure circonférentielle 31 (voir figure 3), et ceci pour empêcher la recirculation d'air en dessous de l'aube 20.

Dans le présent texte, les termes « intérieur » et « extérieur » désignent des positions radiales respectivement proche de l'axe X-X' et éloignée de l'axe X-X' et les termes « amont » et « aval » désignent des positions axiales le long de l'axe X-X', dans le sens de l'écoulement du flux d'air, qui se présentent respectivement l'une avant l'autre.

Ce type d'aube 20 monobloc à attache marteau est généralement réalisée dans un alliage de titane avec mise en oeuvre de plusieurs technologies : les parties se trouvant dans le flux d'air, à savoir la pale 21, le rayon 24 et la face supérieure de la plateforme 23, résultant d'un forgeage tandis que les autres parties, à savoir la face inférieure de la plateforme 23 et le pied, sont obtenues à l'issue d'une étape d'usinage post-forgeage.

Du fait du caractère monobloc de ces aubes 20, il n'est pas possible de réaliser les différentes parties de l'aube 20 selon les procédés et les matériaux les plus adaptés aux contraintes géométriques et de fonctionnement de chacune de ces parties.

Il est également connu de réaliser des aubes comportant une plateforme réduite d'aube (étendue circonférentielle réduite) et qui sont des pièces séparées d'autres pièces constituées de plateformes inter-aubes individualisées.

Les documents US 6 632 070, US 2007 0020102 et en particulier le document US 2006 0222502 se rapportent à une telle situation.

Ainsi, dans le cas du document US 2006 0222502, on monte alternativement, dans la rainure circonférentielle du tambour, une aube, une plateforme inter-aubes, une aube, une plateforme inter-aubes et ainsi de suite. De cette façon, on peut fabriquer séparément, et donc selon des techniques et/ou des matériaux différents, d'un côté les aubes à plateforme réduite et de l'autre côté les plateformes inter-aubes individualisées.

Cependant, du fait du plus grand nombre de pièces constituant la roue aubagée (pratiquement deux fois plus), il existe davantage de manipulations lors du montage (ou du démontage) de la roue aubagée. Comme le jeu dans le sens circonférentiel doit être le plus faible possible (jeu à ajuster), le montage d'un plus grand nombre de pièces engendre du temps supplémentaire et donc un surcoût, ainsi que davantage de risques d'erreur sur la position des pièces entre elles et le long de la série d'aubes et de plateformes inter-aubes.

De plus, avec des plateformes inter-aubes individualisées le système de verrouillage est plus complexe car l'espace généralement occupé par les verrous est utilisé par les plateformes inter-aubes, ce qui conduit à utiliser des plateformes inter-aubes plus complexes appelées plateformes inter-aubes verrouillantes.

En outre, dans ce cas, on risque d'engendrer davantage de fuites d'air, c'est-à-dire des recirculations depuis la veine délimitée par la face extérieure des plateformes vers l'espace situé sous les plateformes, du fait du plus grand nombre possible de passages d'air entre la plateforme réduite d'une aube et la plateforme inter-aube individualisée adjacente. Pour réaliser une optimisation à l'étanchéité avec des plateformes inter-aubes individualisées, il a été proposé de modifier la géométrie de l'aube (ou de la plateforme inter-aube), mais ces tentatives ont abouti à des géométries très compliquées, et qui engendraient des surcoûts importants.

Le document EP 0 524 876 présente une solution dans laquelle une plateforme unique annulaire permet le montage de toutes les aubes.

Le document DE 72 25 964 U se rapporte à un système de montage analogue à celui des figures 1 à 4 décrites précédemment.

Les documents GB 1909 09278 et EP 0 441 424 utilisent des plateformes devant être fixées sur le tambour par des moyens spécifiques.

Le document FR 2 715 968 prévoit le cas précédemment décrit de plateformes inter-aubes individualisées.

Il est également connu, par exemple à travers le document GB 9278 AD 1909, de fournir des plateformes multi-aubes comportant une pluralité d'ouvertures pour recevoir des aubes.

La présente invention a pour objectif de fournir une solution permettant de surmonter les inconvénients de l'art antérieur et en particulier offrant la possibilité de fabriquer séparément les plateformes est les aubes sans toutefois augmenter de façon trop importante le nombre de manipulations lors du montage/démontage et en minimisant les risques de recirculation.

A cet effet, selon la présente invention, la plateforme est caractérisée en ce qu'elle comporte deux raidisseurs comportant des faces d'appui latérales constituant des portées axiales, aptes à coopérer avec le tambour pour, à elles seules, retenir axialement la plateforme sur le tambour et réduire les recirculations d'air.

Cette solution présente l'avantage, de permettre aisément l'optimisation de la plateforme à l'étanchéité, c'est-à-dire de minimiser les risques de recirculation.

Cette solution présente aussi l'avantage d'être compatible avec un système de verrouillage traditionnel.

La présente invention concerne aussi une roue aubagée mobile comprenant des aubes de type attache marteau et un tambour comportant une rainure circonférentielle apte à retenir le pied des aubes et présentant une encoche d'introduction, caractérisée en ce qu'elle comporte plusieurs plateformes du type défini précédemment couvrant chacune un secteur angulaire de la roue aubagée en retenant plusieurs aubes dans le tambour.

La présente invention se rapporte en outre à un compresseur, en particulier un compresseur basse pression, mais également éventuellement un compresseur haute pression, qui comporte une roue aubagée du type défini précédemment.

La présente invention porte enfin sur une turbomachine, en particulier un turboréacteur, comportant une roue aubagée du type défini précédemment.

D'autres avantages et caractéristiques de l'invention ressortiront à la lecture de la description suivante faite à titre d'exemple et en référence aux dessins annexés dans lesquels :
- la figure 1, déjà décrite, est une vue en perspective d'une aube selon l'état de la technique,
- la figure 2, déjà décrite, est une vue en perspective de plusieurs aubes selon la figure 1 montées sur le tambour,
- la figure 3, déjà décrite, est une vue en projection selon la direction III de la figure 2,
- la figure 4, déjà décrite, est une vue en coupe selon la direction IV-IV de la figure 3,
- la figure 5 est une vue similaire à celle de la figure 2 pour une plateforme selon l'invention,
- la figure 6 est une vue en projection selon la direction VI de la figure 5,
- les figures 7 et 8 sont des vues en coupe respectivement selon les directions VII-VII et VIII-VIII de la figure 6,
- les figures 9 et 10 sont des vues en perspectives partielles de la plateforme multi-aubes selon l'invention et de l'aube à plateforme réduite selon l'invention,
- les figures 11 à 13 sont des vues en perspective illustrant les étapes de montage entre une plateforme multi-aubes, des aubes à plateforme réduite et un tambour, et
- la figure 14 est une vue partielle agrandie en section selon la direction XIV- XIV de la figure 13.

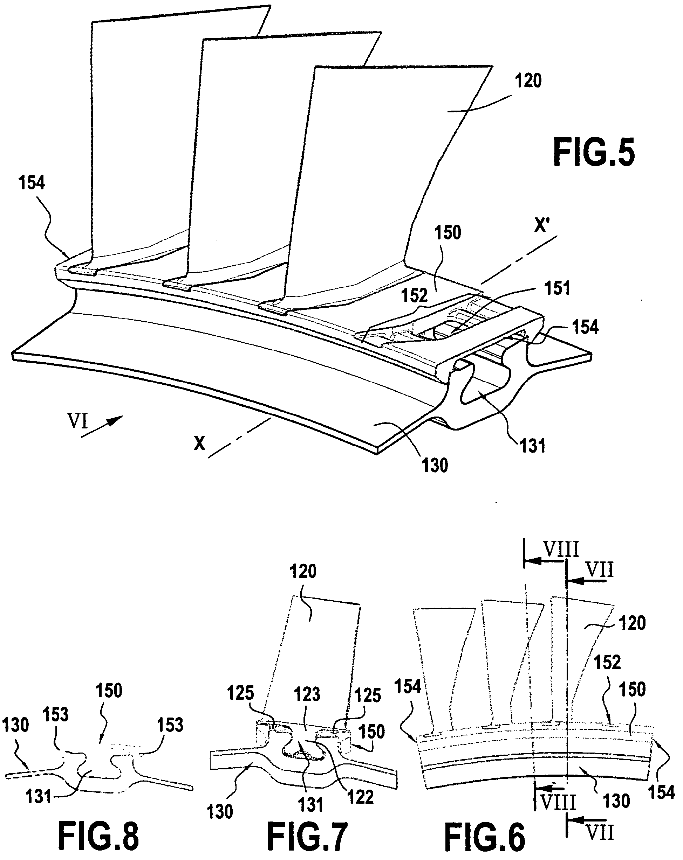

Si l'on se réfère à la figure 5, Le tambour 130 est représenté partiellement dans une portion correspondant à un secteur angulaire recouvrant quatre aubes à plate-forme réduite 120 (seules trois parmi ces quatre aubes 120 sont représentées sur la figure 5) qui sont retenues chacune par leur pied 122 dans la rainure circonférentielle 131 du tambour 130 au moyen d'une plate-forme multi-aubes 150.

À cet effet, la plate-forme multi-aubes 150 comporte, pour chaque aube 120, une ouverture 151 débouchant dans la rainure circonférentielle 131 lorsque la plateforme 150 est montée sur le tambour 130.

La plate-forme multi-aubes 150 comporte en outre, à l'emplacement de chaque ouverture 151, un logement 152 débouchant sur la face extérieure de la plate-forme multi-aubes 150 et permettant la réception d'une plateforme réduite d'aube 123. Ce logement 152 est une cavité s'étendant sur toute la longueur, en direction axiale, de la plateforme 150, et en largeur, en direction circonférentielle, sur la même distance que l'ouverture 151 ou que la largeur de la plateforme réduite 123 de l'aube 120, qui est elle-même au plus aussi large que le pied 122 de l'aube 120.

Afin de permettre le montage de la plateforme 150 sur le tambour, la plateforme 150 comporte en outre deux raidisseurs 153 aptes à retenir axialement la plateforme 150 sur le tambour 130 et à réduire les recirculations d'air.

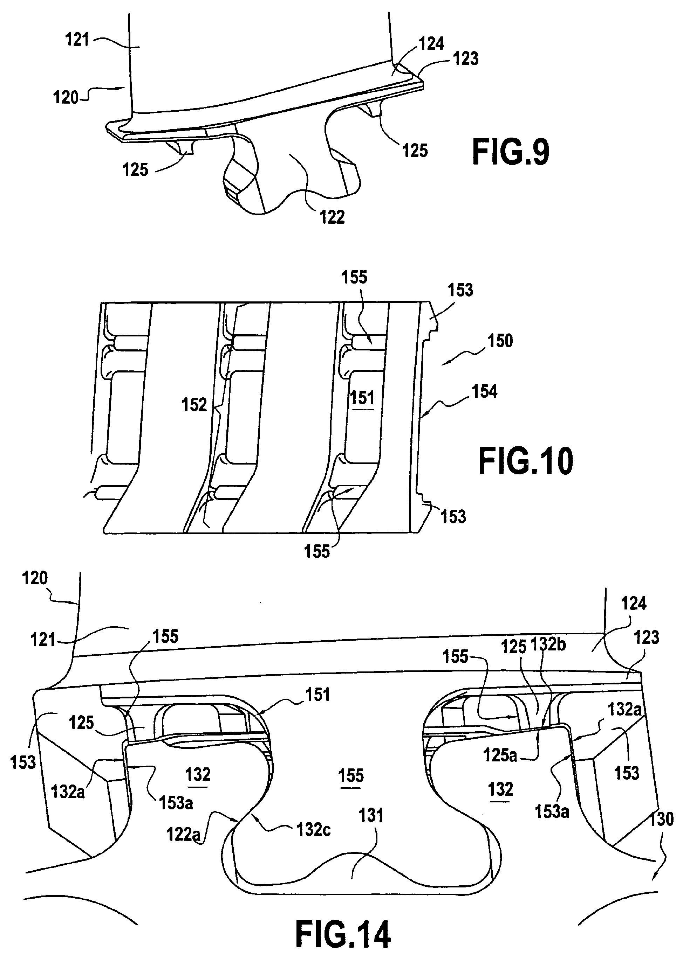

A cet effet, les deux raidisseurs 153 constituent des nervures intérieures situées aux deux extrémités amont et aval de la plateforme 150 et les deux raidisseurs 153 comportent (voir figure 14) des faces d'appui latérales 153a destinées à coopérer avec des faces d'appui 132a des parois latérales 132 de la rainure circonférentielle 131. Les faces d'appui latérales 132a et 153a constituent des portées axiales, à savoir des surfaces qui assurent un contact intégral entre elles, pour la parfaite tenue axiale entre le tambour 130 et la plateforme 150.

De cette façon, en outre, on forme un labyrinthe entre le tambour 130 et les raidisseurs 153, ce qui réduit les recirculations d'air en dessous de la plateforme (face intérieure), ce par quoi on peut se passer du joint torique 40.

La plateforme 150 comporte en outre (voir les figures 5, 6, 10, 12 et 13) à chacune de ses deux extrémités circonférentielles une face d'appui inter-plateformes 154 apte à venir, après montage de la plateforme 150 sur le tambour 130, en appui contre une face d'appui inter-plateformes 154 de la plateforme 150 voisine.

La plateforme 150 comporte en outre, de part et d'autre de chaque ouverture 151, en direction axiale, deux orifices 155 permettant chacun le passage d'un taquet d'aube 125 (voir les figures 9, 10 et 14).

Ainsi, on comprend que le logement 152 délimite un espace en retrait, qui forme une dépression, par rapport à la surface extérieure de la plateforme 150, qui ne traverse toute l'épaisseur de la plateforme 150 qu'aux emplacements de l'ouverture 151 et des orifices 155.

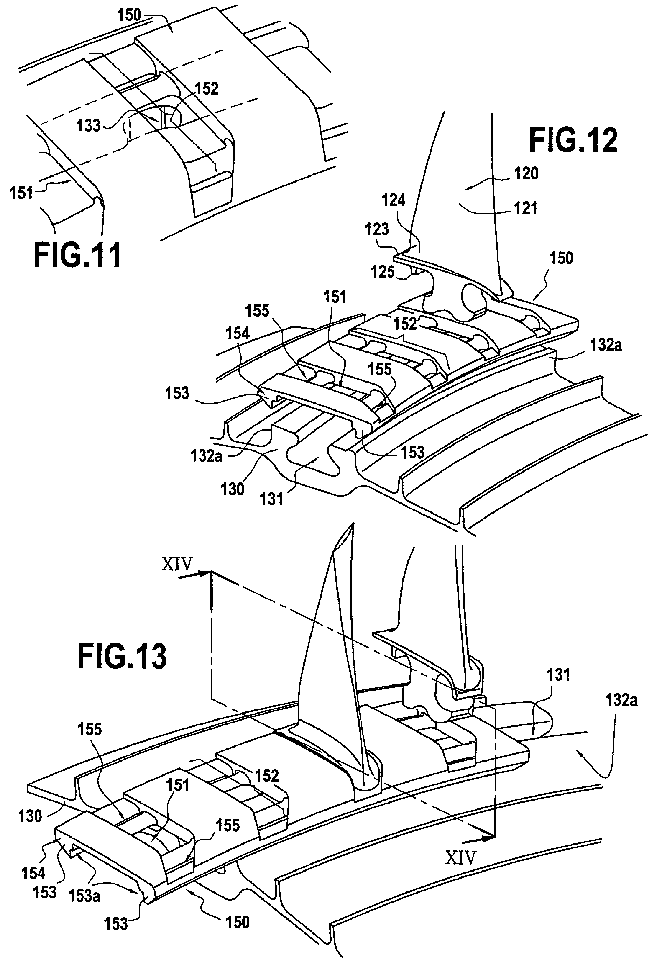

Comme il ressort notamment des figures 9 et 12, selon la présente invention l'aube 120, qui est dédiée à la plateforme multi-aubes 150 selon la présente invention, est réalisée en une seule pièce et comporte une pale 121 et un pied 122 entre lesquels est formée une plateforme réduite 123 dont les dimensions dans les directions axiale, circonférentielle et radiales correspondent exactement respectivement aux dimensions dans les directions axiale, circonférentielle et radiales du logement 152 dans lequel cette plateforme réduite 123 est apte à s'insérer.

Ainsi, on évite des recirculations entre les plateformes réduites 123 et la plateforme 150 multi-aubes.

De plus en prévoyant que les faces supérieures des plateformes réduites 123 et de la plateforme 150 multi-aubes soient affleurantes lorsque chaque plateformes réduite 123 est disposés dans son logement 152, on évite toute perturbation aérodynamique du flux d'air.

L'aube 120 à plateforme 123 réduite comporte également un rayon 124 similaire au rayon 24 de l'aube 20 décrite précédemment en relation avec l'art antérieur.

En outre, la face inférieure de la plateforme réduite 123 présente deux taquets d'aubes 125 disposés axialement de part et d'autre du pied 122 et orientés en direction du pied 122.

Ces deux taquets d'aubes 125 traversent les deux orifices 155 de la plateforme 150 pour interagir avec le tambour 130. A cet effet, les extrémités libres des taquets 125 présentent des faces d'appui intérieures 125a (voir figure 14) qui viennent coopérer par appui contre des faces d'appui extérieures 132b correspondantes situées sur l'extrémité libre intérieure des parois latérales 132 de la rainure circonférentielle 131 du tambour.

De cette façon, les taquets 125 de l'aube 120 interagissent avec les faces d'appui extérieures 132b du tambour 130 pour un maintien radial de la plateforme 150. L'orifice 155 est réalisé et dimensionné de manière à permettre cette interaction entre l'aube 120 et le tambour 130.

Cette version à deux taquets 125 est celle qui est préférée et qui est représentée sur les figures (voir notamment les figures 7, 9 et 14), mais selon une variante non représentée, la plateforme réduite 123 ne comporte qu'un seul taquet 125. Dans ce cas, la plateforme multi-aubes 150 est soit inchangée et l'un des deux orifices 155 reste vacant après montage, soit la plateforme multi-aubes 150 ne comporte qu'un seul orifice 155.

L'interaction entre les faces d'appui latérales 153a de la plateforme 150 avec les faces d'appui latérales 132a du tambour 130, garantit d'une part le bon positionnement axial de la plateforme 130 dans l'assemblage, et d'autre part que les recirculations d'air par le dessous de la plateforme (fuite d'air) seront limitées.

Il est à noter que la position relative entre le pied 122 de chaque aube 120 et la rainure circonférentielle 131 du tambour reste, de façon similaire au montage de l'art antérieur présenté en relation avec les figures 1 à 4, déterminée en direction axiale et radiale par le contact établi, lors de la rotation et sous l'effet de la force centrifuge, entre la face d'appui intérieure inclinée 132c des parois latérales 132 de la rainure circonférentielle 131 et la face d'appui inclinée extérieure 122a de la face latérale du pied 122 .

Selon le mode de réalisation décrit précédemment et illustré sur les figures, la plateforme multi-aubes 150 comporte quatre ouvertures 151 espacées en direction circonférentielle et aptes à recevoir chacune une aube 120. A cet égard, et selon la présente invention, la plateforme multi-aubes 150 couvre un secteur angulaire de plusieurs aubes 120, ce qui signifie que la plateforme multi-aubes 150 peut être réalisée selon plusieurs variantes afin de recevoir deux, trois ou davantage d'aubes 120 au moyen d'autant d'ouvertures 151 qui sont chacune associées au logement 152 et aux deux orifices 155.

La plateforme multi-aubes 150 est de préférence réalisée dans un alliage métallique léger ou dans un matériau composite comprenant une matrice thermoplastique et des fibres, de préférence des fibres courtes, mais on peut utiliser des fibres longues.

Par exemple, la matrice thermoplastique est du PEI (Polyetherimide) ou du PEEK (polyétheréthercétone) et les fibres sont constituées de fibres de carbone ou de verre.

Alternativement, on peut également prévoir de réaliser la plateforme multi-aubes 150 en alliage d'aluminium.

Le tambour 130 peut être le même que le tambour 30 de l'art antérieur. Cependant, du fait que, selon l'invention, la plateforme 150 est séparée des aubes 120 et peut donc être réalisée, comme indiqué précédemment, dans un matériau plus léger que le matériau constituant les aubes 120 (en général en titane), il est possible d'amincir le tambour 130 qui est soumis à des forces réduites.

Ainsi, on comprend que grâce à l'invention, l'aube 120 à plateforme réduite est issu d'un « forgé » de taille réduite par rapport à celui nécessaire pour l'obtention de l'aube 20 selon l'art antérieur.

En outre, grâce à l'invention, on obtient un allégement du poids de l'ensemble constitué des aubes 120 et des plateformes multi-aubes 150, et donc du rotor (ou roue aubagée) lorsque cet ensemble est monté sur le tambour 130.

En relation avec les figures 11 à 13, on va maintenant expliciter le montage entre chaque plateforme 150, le tambour 130 et les aubes 120.

Il faut en premier lieu placer la plateforme multi-aubes 150 sur le tambour 130 par coulissement entre les faces d'appui latérales 153a des raidisseurs 153 et les faces d'appui latérales 132a des parois latérales 132 de la rainure circonférentielle 131 du tambour 130 (voir figure 13). A cette étape, on place (voir figure 11), une ouverture 151 de la plateforme multi-aubes 150 en regard d'une encoche d'introduction 133 formant un évidement unique dans le fond de la rainure circonférentielle 131 du tambour 130.

En second lieu, on introduit le pied 122 d'une première aube 120 dans l'ouverture 151 disposée en regard de l'encoche d'introduction 133, avant de placer tout le pied 122 dans la rainure circonférentielle 131.

Lors de cette étape, les taquets 125 viennent se placer automatiquement dans les orifices 155 correspondant. (voir figure 14)

En troisième lieu, on déplace en direction circonférentielle la plateforme multi-aubes 150 sur le tambour 130 par coulissement entre les faces latérales d'appui 153a des raidisseurs 153 et les faces d'appui latérales 132a des parois latérales 132 de la rainure circonférentielle 131 du tambour 130, de façon à placer l'ouverture suivante 151 en regard de l'encoche d'introduction 133, et ceci afin de permettre le montage de l'aube suivante dans la plateforme multi-aubes 150.

Lors de cette étape, on réalise le verrouillage de la première aube 120 car cette dernière ne se trouvant plus en regard de l'encoche d'introduction 133, son pied 122 ne peut plus sortir de la rainure circonférentielle 131 et l'on se trouve dans la position de blocage de la figure 14.

Lorsque toutes les aubes 120 du secteur angulaire correspondant à la longueur circonférentielle de la plateforme multi-aubes 150 sont montées de cette façon, on procède au montage de la plateforme multi-aubes 150 suivantes et de ses aubes 120 correspondantes, et ainsi de suite.

Lorsque toutes les plateforme multi-aubes 150 et toutes les aubes 120 ont été montées, on réalise, comme dans l'art antérieur, au verrouillage de l'ensemble par la mise en place de deux verrous (non représentés) dans et de part et d'autre de l'encoche d'introduction 133.

On comprend que la plateforme 150 positionne les aubes 120 circonférentiellement sur le tambour 130.

Grâce à la plateforme multi-aubes 150, les phases de montage (ou en sens inverse de démontage) sont aisées, fiables et rapides.

Ainsi, on comprend que par la présence d'une plateforme multi-aubes 150, on améliore la délimitation de la veine dans laquelle circule le flux d'air traversant la roue mobile, tout en minimisant les recirculations d'air.

## Revendications

1. Plateforme (150) pour une roue aubagée de turbomachine comportant un tambour (130) et des aubes (120) de type attache marteau, comportant au moins deux ouvertures (151) espacées en direction circonférentielle et aptes à recevoir chacune le pied (122) d'une aube (120), ce par quoi elle constitue une plateforme multi-aubes sous la forme d'une pièce séparée des aubes (120), couvrant un secteur angulaire et **caractérisée en ce qu'**elle comporte en outre deux raidisseurs (153) comportant des faces d'appui latérales (153a) constituant des portées axiales, aptes à coopérer avec le tambour (130) pour, à elles seules, retenir axialement la plateforme (150) sur le tambour (130) et réduire les recirculations d'air.

2. Plateforme (150) selon la revendication précédente, **caractérisée en ce qu'**elle comporte en outre, à l'emplacement de chaque ouverture (151), un logement (152) débouchant sur la face extérieure permettant la réception d'une plateforme réduite d'aube (123).

3. Plateforme (150) selon l'une quelconque des revendications précédentes, **caractérisée en ce qu'**elle comporte en outre à chacune de ses deux extrémités circonférentielles une face d'appui inter-plateformes (154) apte à venir, après montage sur le tambour (130), en appui contre une face d'appui inter-plateformes (154) de la plateforme (150) voisine.

4. Plateforme (150) selon l'une quelconque des revendications précédentes, **caractérisée en ce qu'**elle comporte en outre, de part et d'autre de chaque ouverture (151), en direction axiale, deux orifices (155) permettant chacun le passage d'un taquet d'aube (125).

5. Plateforme (150) selon l'une quelconque des revendications précédentes, **caractérisée en ce qu'**elle comporte quatre ouvertures (151) espacées en direction circonférentielle et aptes à recevoir chacune une aube (120).

6. Plateforme (150) selon l'une quelconque des revendications précédentes, **caractérisée en ce qu'**elle est réalisée dans un alliage métallique léger ou dans un matériau composite comprenant une matrice thermoplastique et des fibres.

7. Roue aubagée mobile comprenant des aubes (120) de type attache marteau et un tambour (130) comportant une rainure circonférentielle (131) apte à retenir le pied (122) des aubes (120) et présentant une encoche d'introduction (133), **caractérisée en ce qu'**elle comporte plusieurs plateformes (150) selon l'une quelconque des revendications 1 à 6 couvrant chacune un secteur angulaire de la roue aubagée en retenant plusieurs aubes (120) dans le tambour (130).

8. Roue aubagée mobile selon la revendication 8, dans laquelle chaque aube (120) est réalisée en une seule pièce et comporte une pale (121) et un pied (122) entre lesquels est formée une plateforme (123) occupant une des ouvertures (151) dans les plateformes (150) multi-aubes.

9. Roue aubagée mobile selon la revendication 9, dans laquelle une face intérieure de la plateforme (123) de chaque aube (120) présente deux taquets d'aubes (125) disposés axialement de part et d'autre du pied (122) et orientés en direction du pied (122).

10. Compresseur comprenant au moins une roue aubagée selon l'une quelconque des revendications 7 à 9.

11. Turbomachine comprenant au moins une roue aubagée selon l'une quelconque des revendications 7 à 9.

## Patentansprüche

1. Plattform (150) für ein beschaufeltes Laufrad einer Strömungsmaschine, umfassend eine Trommel (130) und Schaufeln (120) vom Typ Hammerträger, umfassend mindestens zwei Öffnungen (151), die in Umfangsrichtung beabstandet und geeignet sind, jeweils den Fuß (122) einer Schaufel (120) aufzunehmen, weshalb sie eine Plattform mit mehreren Schaufeln in Form eines von den Schaufeln (120) getrennten Teils darstellt, das einen Winkelsektor abdeckt, und **dadurch gekennzeichnet, dass** sie ferner zwei Versteifungen (153) umfasst, die seitliche Stützflächen (153a) umfassen, die Axialbereiche darstellen, die geeignet sind, mit der Trommel (130) zusammenzuwirken, um alleine die Plattform (150) axial auf der Trommel (130) zu halten und die Luftrückströmungen zu reduzieren.

2. Plattform (150) nach dem vorhergehenden Anspruch, **dadurch gekennzeichnet, dass** sie ferner an der Stelle jeder Öffnung (151) eine Lagerung (152) umfasst, die auf der Außenseite mündet und die Aufnahme einer reduzierten Schaufelplattform (123) ermöglicht.

3. Plattform (150) nach einem der vorhergehenden Ansprüche, **dadurch gekennzeichnet, dass** sie ferner an jedem ihrer beiden Umfangsenden eine Stützfläche (154) zwischen Plattformen umfasst, die geeignet ist, nach Montage auf der Trommel (130) an einer Stützfläche (154) zwischen Plattformen der benachbarten Plattform (150) zur Anlage zu gelangen.

4. Plattform (150) nach einem der vorhergehenden Ansprüche, **dadurch gekennzeichnet, dass** sie ferner beiderseits jeder Öffnung (151) in Axialrichtung zwei Öffnungen (155) umfasst, die jeweils die Durchführung eines Schaufelansatzes (125) ermöglichen.

5. Plattform (150) nach einem der vorhergehenden Ansprüche, **dadurch gekennzeichnet, dass** sie vier Öffnungen (151) umfasst, die in Umfangsrichtung beabstandet und geeignet sind, jeweils eine Schaufel (120) aufzunehmen.

6. Plattform (150) nach einem der vorhergehenden Ansprüche, **dadurch gekennzeichnet, dass** sie aus einer Leichtmetalllegierung oder einem Verbundstoff, umfassend eine thermoplastische Matrix und Fasern, hergestellt ist.

7. Beschaufeltes Laufrad, umfassend Schaufeln (120) vom Typ Hammerträger und eine Trommel (130), umfassend eine Umfangsnut (131), die geeignet ist, den Fuß (122) der Schaufeln (120) zu halten, und eine Einführkerbe (133) aufweist, **dadurch gekennzeichnet, dass** es mehrere Plattformen (150) nach einem der Ansprüche 1 bis 6, umfasst, die jeweils einen Winkelsektors des beschaufelten Laufrads abdecken, wobei sie mehrere Schaufeln (120) in der Trommel (130) halten.

8. Beschaufeltes Laufrad nach Anspruch 8, bei dem jede Schaufel (120) in einem Stück hergestellt ist und ein Schaufelblatt (121) und einen Fuß (122) umfasst, zwischen denen eine Plattform (123) ausgebildet ist, die eine der Öffnungen (151) in den Plattformen (150) mit mehreren Schaufeln einnimmt.

9. Beschaufeltes Laufrad nach Anspruch 9, bei dem die Innenseite der Plattform (123) jeder Schaufel (120) zwei Schaufelansätze (125) aufweist, die axial beiderseits des Fußes (122) angeordnet und in Richtung des Fußes (122) ausgerichtet sind.

10. Kompressor, umfassend mindestens ein beschaufeltes Laufrad nach einem der Ansprüche 7 bis 9.

11. Strömungsmaschine, umfassend mindestens ein beschaufeltes Laufrad nach einem der Ansprüche 7 bis 9.

## Claims

1. A platform (150) for a bladed wheel of a turbomachine comprising a drum (130) and blades (120) of hammer-head attachment type, the platform comprising at least two openings (151) spaced apart circumferentially and each able to receive the foot (122) of a blade (120), whereby it constitutes a multiple-blade platform in the form of a piece separate from the blades (120), covering an angular segment and **characterized in that** it also comprises two stiffeners (153) comprising lateral bearing faces (153a) constituting axial support surfaces, capable of cooperating with the drum (130) to axially retain, on their own, the platform (150) on the drum (130) and to reduce air recirculations.

2. A platform (150) according to the preceding claim, **characterized in that** it also comprises, in the position of each opening (151), a recess (152) opening out onto the external face making it possible to receive a reduced blade platform (123).

3. A platform (150) according to any preceding claim, **characterized in that** it also comprises, at each of its two circumferential ends, an inter-platform bearing face (154) able to bear, after fitting on the drum (130), against an inter-platform bearing face (154) of the adjacent platform (150).

4. A platform (150) according to any preceding claim, **characterized in that** it also comprises, on either side of each opening (151), in the axial direction, two orifices (155) each enabling the passage of a blade catch (125).

5. A platform (150) according to any preceding claim, **characterized in that** it comprises four openings (151) spaced apart circumferentially and each able to receive a blade (120).

6. A platform (150) according to any preceding claim, **characterized in that** it is made of a light metal alloy or of a composite material comprising a thermoplastic matrix and fibres.

7. A movable bladed wheel comprising blades (120) of hammer-head attachment type and a drum (130) comprising a circumferential groove (131) able to retain the foot (122) of the blades (120) and having an insertion notch (133), the movable bladed wheel being **characterized in that** it comprises several platforms (150) according to any one of claims 1 to 6, each covering an angular segment of the bladed wheel and retaining several blades (120) in the drum (130).

8. A movable bladed wheel according to claim 7, in which each blade (120) is made in a single piece and comprises a vane (121) and a foot (122), between which is formed a platform (123) that takes up one of the openings (151) in the multiple-blade platforms (150).

9. A movable bladed wheel according to claim 8, in which an internal face of the platform (123) of each blade (120) has two blade catches (125) arranged axially on either side of the foot (122) and oriented towards the foot (122).

10. A compressor comprising at least one bladed wheel according to any one of claims 7 to 9.

11. A turbomachine comprising at least one bladed wheel according to any one of claims 7 to 9.
